# EUROPEAN PATENT SPECIFICATION

(11) **EP 0 541 061 B1**
(45) Date of publication and mention of the grant of the patent: **02.07.1997**
(21) Application number: 92118891.8
(22) Date of filing: 04.11.1992
(51) Int. Cl.: H01S 3/06, H04B 10/14, H04B 10/16

(54) **Optical-fiber light amplifier**
Faseroptischer Verstärker
Amplificateur à fibre optique

(30) Priority: 08.11.1991 JP 292865/91; 19.02.1992 JP 31846/92; 07.04.1992 JP 85518/92; 22.06.1992 JP 162786/92
(43) Date of publication of application: 12.05.1993
(60) Divisional application: 94116464.2
(73) Proprietor: MITSUBISHI DENKI KABUSHIKI KAISHA, Tokyo 100 (JP)
(72) Inventor: Mizuochi, Takashi, c/o Mitsubishi Denki K. K., Kamakura-shi, Kanagawa, 247 (JP); Kitayama, Tadayoshi, c/o Mitsubishi Denki K. K., Kamakura-shi, Kanagawa, 247 (JP); Shimizu, Katsuhiro, c/o Mitsubishi Denki K. K., Kamakura-shi, Kanagawa, 247 (JP); Matsushita, Kiwami, c/o Mitsubishi Denki K. K., Kamakura-shi, Kanagawa, 247 (JP); Takemura, Nobuyuki, c/o Mitsubishi Denki K. K., Kamakura-shi, Kanagawa, 247 (JP); Nakagawa, Eiichi, c/o Mitsubishi Denki K. K., Kamakura-shi, Kanagawa, 247 (JP)
(74) Representative: Pfenning, Meinig & Partner

(56) References cited:
- EP-A- 0 392 490
- EP-A- 0 404 152
- EP-A- 0 415 438
- EP-A- 0 444 694
- EP-A- 0 449 475
- DE-A- 4 005 867
- FR-A- 2 550 645
- GB-A- 2 242 091
- PATENT ABSTRACTS OF JAPAN vol. 015, no. 494 (E-1145)13 December 1991;& JP-A-3215982
- PATENT ABSTRACTS OF JAPAN vol. 010, no. 325 6 November 1986;& JP-A-61133687
- Patent Abstracts of Japan, vol. 15, no. 490 (E-1144), 11.12.91; and JP-A-03 214 681

## Description

### BACKGROUND OF THE INVENTION

### 1. Field of the Invention:

This invention relates to an optical-fiber amplifier which is to be used in a light communication system and uses an optical fiber doped of a rare earth element.

### 2. Description of the Related Art:

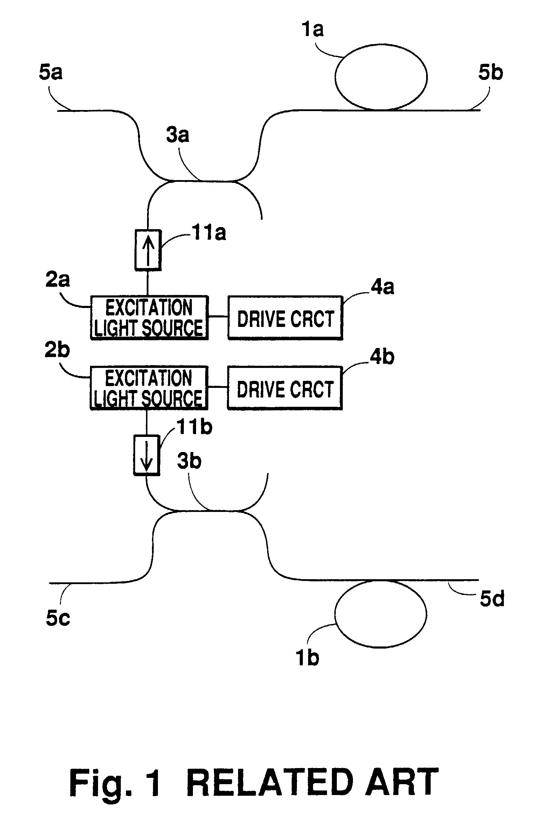

FIG. 1 of the accompanying drawings shows a conventional optical-fiber amplifier of the type described above, the amplifier being to be used for a two-system signal line. In FIG. 1, reference numerals 1a, 1b designate first and second rare-earth-doped optical fibers; 2a, 2b, first and second pumping light sources; 3a, 3b, first and second multiwavelength combining and dividing devices; 4a, 4b, first and second pumping light source drive circuits; 5a, 5b, 5c, 5d, input and output terminals for signal light; and 11a, 11b, first and second isolators.

In operation, each of the first and second rare-earth-doped optical fibers 1a, 1b is a single-mode optical fiber doped of a rare earth element such as erbium (Er) and having a length of several meters to several tens meters. The first wavelength division multi/demultiplexing (WDM) device 3a is connected to the first rare-earth-doped optical fiber 1a. The wavelength division multi/demultiplexing (WDM) devices may be optical couplers. The first and second pumping light source 2a, 2b are semiconductor lasers having a wavelength of, for example, 1.48 µm and are driven the first and second pumping light source drive circuits 4a, 4b, respectively. When several mW to several tens mW of first pumping light outputted from the first pumping light source 2a is inputted to the first rare-earth-doped optical fiber 1a via the first wavelength division multi/demultiplexing (WDM) device 3a, the first rare-earth-doped optical fiber 1a assumes an inverted distribution state so that the signal light having a wavelength of 1.53 or 1.55 µm and inputted from the input and output terminal 5a for the signal light is amplified by the action of induced emission for output to the input and output terminal 5b. Likewise, when the second pumping light outputted from the second pumping light source 2b is inputted to the second rare-earth-doped optical fiber 1b via the second wavelength division multi/demultiplexing (WDM) device 3b, the second rare-earth-doped optical fiber 1b assumes a population inversion state so that the signal light inputted from the input and output terminal 5c is amplified for output to the input and output terminal 5d. With this conventional arrangement, it is impossible to improve the reliability of this type optical-fiber light amplifier.

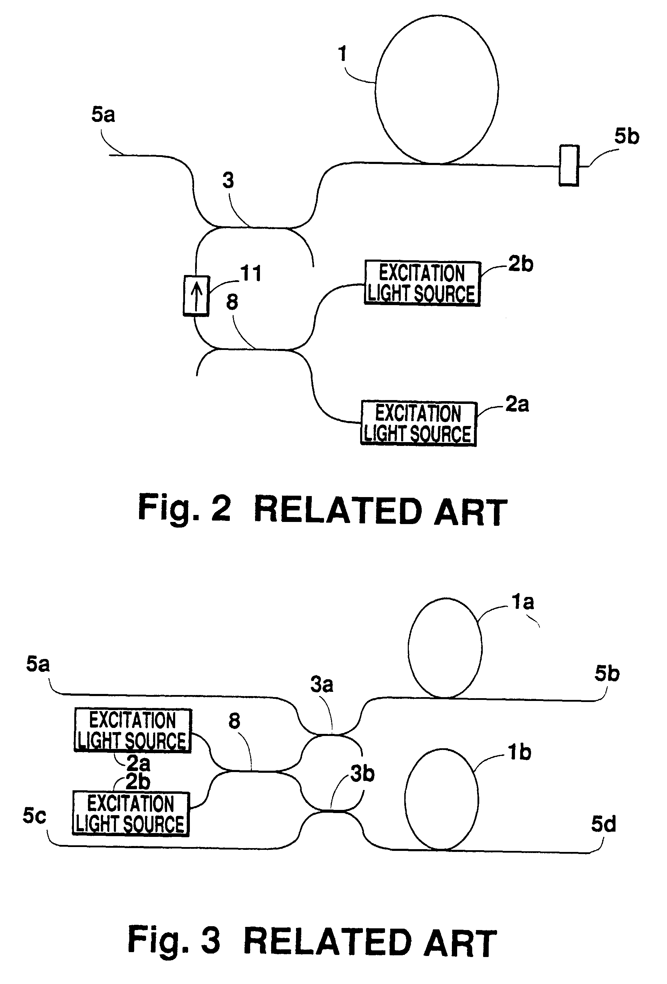

The simplest popular optical-fiber amplifier for a single-system signal has a construction such as shown in FIG. 2. This known art is exemplified by Japanese Patent Laid-Open Publication No. Hei 2-241073. In this light amplifier, two sources for pumping light are combined by a combining device. In FIG. 2, reference numeral 1 designates a rare-earth-doped optical fiber; 2a, 2b, first and second pumping light sources; 3, a multiwavelength combining device for combining pumping light and signal light; and 8, a combining device for combining the first pumping light and the second pumping light. However, when the the first pumping light and the second pumping light are combined by the combining device 8, the combined light power will be 1/2 of the total light power of the first and second pumping light emitted from the first and second sources 2a, 2b. Further, since the first pumping light and the second pumping light interfere with one another, the output power of the combining device tends to fluctuate and hence to be non-stable.

FIG. 3 shows a conventional optical amplifier for a double-system signal, which is a natural expansion of the construction of FIG. 2. First pumping light and second pumping light outputted from the first and second sources 2a, 2b are combined and then divided by a combining and dividing device 8, and the resulting separate parts of pumping light are inputted to first and second rare-earth-doped optical fibers 1a, 1b via first and second multiwavelength combining devices 3a, 3b. However, the output of the combining device 8 is non-stable so that the amplifying characteristic of the rare-earth-doped optical fibers 1a, 1b will not be stable.

With this conventional arrangement, the level of pumping light to be inputted to the amplifying media will not be stable.

DE-A1-40 05 867 discloses an optical-fiber amplifier having a first and second source for emitting horizontally polarized first pumping light and vertically polarized second pumping light being combined by an optical coupler to form combined light. The thus combined light is further combined with the signal light and input to an amplifying medium.

JP-A-03 214 681 describes a fiber type amplifier with a pumping light source driven by a driving circuit. The pumping light is divided in two by means of an optical branching filter after passing through an optical isolator. One pumping light is inputted in the left direction into a rare earth optical fiber through an optical coupler and the other in the right direction.

EP-A2-0 444 694 refers to an optical coupler including means for polarizing first and second pumping light such that they are perpendicular to each other. The coupling of the two pumping lights is used to raise the power of an output pumping beam.

It is therefore an object of this invention to provide a high-reliability optical-fiber amplifier which does not cause fluctuation of light power level of an output signal even when output light level fluctuation of pumping light sources or cutting-off of one of the pumping light sources occurs.

The object is solved by the features of claim 1.

Since the first pumping light and the second pumping light from the first and second pumping light sources are combined after controlled in such a polarized state that they are perpendicular to one another, the combined light is free from fluctuation due to interference. Further, since the combined light is divided for distribution to the first and second amplifying media, both the first and second amplifying media can perform the amplifying action even when the cutting-off of either of the first and second pumping light sources has occurred.

### BRIEF DESCRIPTION OF THE DRAWINGS

FIG. 1 is a diagram showing an optical-fiber amplifier of the related art;
FIG. 2 is a diagram showing a first system of optical-fiber amplifier of the related art;
FIG. 3 is a diagram showing a second system of optical-fiber amplifier of the related art;
FIG. 4 is a diagram showing an optical-fiber amplifier for the purpose of describing the invention;
FIG. 5 is a graph showing the relation between pumping power and gain of the optical-fiber amplifier according to the embodiment of FIG. 10;
FIG. 6 is a diagram showing a further optical-fiber amplifier for the purpose of describing the invention;
FIG. 7 is a diagram showing an optical-fiber amplifier according to an embodiment of the invention;

### DETAILED DESCRIPTION

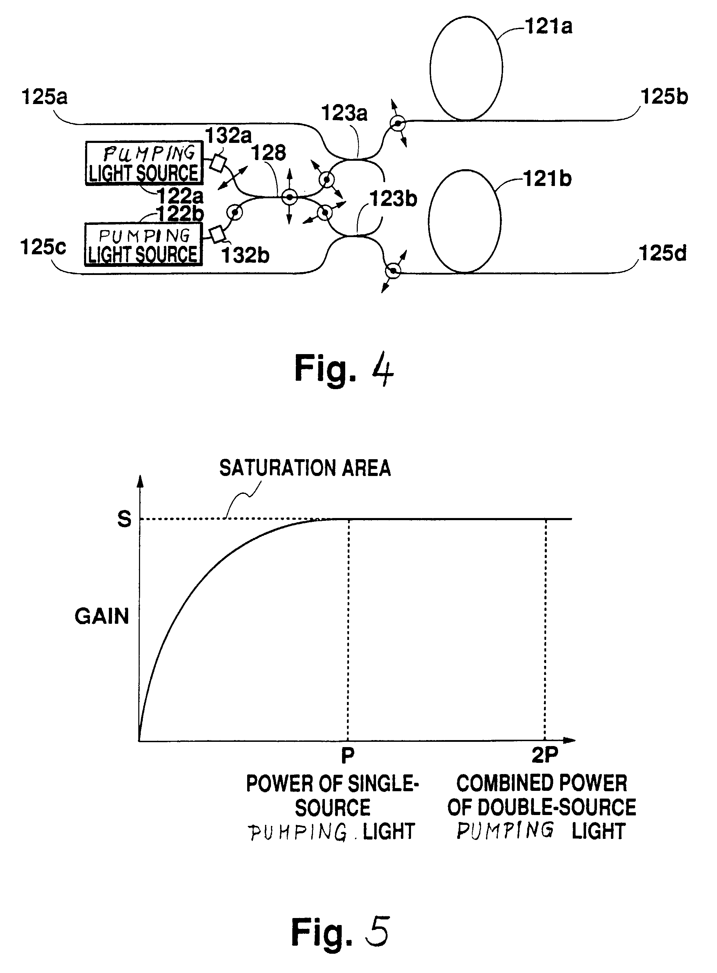

FIG. 4 shows an embodiment of an optical-fiber amplifier for describing this invention. In FIG. 4, reference numerals 121a, 121b designate first and second optical fibers doped of a rare earth element; 122a, 122b, first and second pumping light sources; 123a, 123b, first and second wavelength division multi/demultiplexing (WDM) devices for combining signal light and pumping light; 128, a pumping light combining and dividing device; and 132a, 132b, first and second polarization controllers. The wavelength division multi/demultiplexing device may be a WDM optical coupler, and the pumping light combining and dividing device may be an optical coupler. The polarization controller may be a construction in which the native polarization plane of a polarization-maintaining fiber can be fixed to match the polarization of pumping light and is fixed to an optical axis of the combining device, or another construction in which a λ/4 plate and a λ/2 plate are incorporated, or a further construction in which a desired polarization state can be obtained using a Faraday rotating element, or any other construction which can control the polarization state.

The operation of the optical-fiber amplifier of this embodiment will now be described. The first pumping light and the second pumping light outputted respectively from the first and second pumping light sources 122a, 122b are polarized so as to be perpendicular to one another and are then combined and divided by the pumping light combining and dividing device 128, whereupon they will be inputted to the respective rare-earth-doped optical fibers 121a, 121b by the respective wavelength division multi/demultiplexing (WDM) devices 123a, 123b. Since the combining takes place after the polarization controlling, the combined light never cause fluctuation due to interference. In this embodiment, the pumping light combining and dividing device 128 divides the power at a ratio of 1:1. Alternatively the power may be distributed at a ratio different from 1:1, depending on the power of output light of first and second pumping light sources 122a, 122b and the construction of the pumping light combining and dividing device 128.

Since the second pumping light outputted from the second pumping light source 122b is inputted to the first and second rare-earth-doped optical fibers 121a, 121b even in the presence of an abnormality in the first pumping light source 122a, the first and second rare-earth-doped optical fibers 121a, 121b will remain their amplifying action. At that time, as shown in FIG. 5, if the first and second rare-earth-doped optical fibers 121a, 121b are preset so as to be activated at a saturated area or at another area near the saturated area even by only the power P of the second pumping light outputted from the second pumping light source 122b, the combined light provides the power 2P so that the amplification gains of the first and second rare-earth-doped optical fibers 121a, 121b will not vary even when the first pumping light source 122a is cut off.

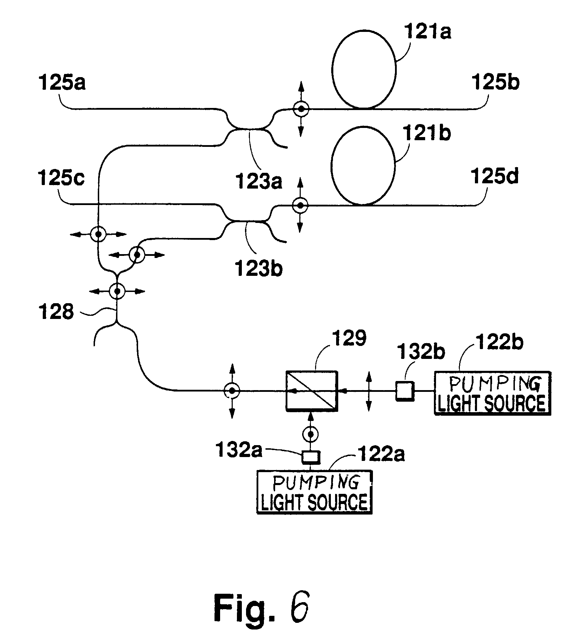

FIG. 6 shows an embodiment of the optical-fiber amplifier explaining the invention. In FIG. 6, reference numerals 121a, 121b designate first and second optical fibers doped of a rare earth element; 122a, 122b, first and second pumping light sources; 123a, 123b, first and second wavelength division multi/demultiplexing (WDM) devices for combining signal light and pumping light; 129, a polarization beam splitter for combining the first and second pumping light emitted from the first and second pumping light sources 122a, 122b; 128, an pumping light combining and dividing device; and 132a, 132b, first and second polarization controllers. The wavelength division multi/demultiplexing (WDM) device may be a multiwavelength optical coupler, and the pumping light combining and dividing device may be an optical coupler.

The operation of the optical-fiber amplifier of this embodiment will now be described. The first pumping light and the second pumping light outputted respectively from the first and second pumping light sources 122a, 122b are polarized so as to be perpendicular to one another and are then combined and divided by the pumping light combining and dividing device 128, whereupon they will be inputted to the respective rare-earth-doped optical fibers 121a, 121b by the respective wavelength division multi/demultiplexing (WDM) devices 123a, 123b. Since the combining takes place after the polarization controlling, the level of the combined pumping light is stable. In this embodiment, since the polarization beam splitter 129 and the dividing device 128 are separate from one another, the power of pumping light to be divided by the dividing device 128 can be distributed selectively by controlling the dividing device 128, thus realizing a system which is more flexible than that of Fig. 4.

Since the second pumping light outputted from the second pumping light source 122b is inputted to the first and second rare-earth-doped optical fibers 121a, 121b even in the presence of an abnormality in the first pumping light source 122a, the first and second rare-earth-doped optical fibers 121a, 121b will maintain their amplifying action. At that time, if the first and second rare-earth-doped optical fibers 121a, 121b are preset so as to be activated at a saturated area or at another area near the saturated area even by only the second pumping light outputted from the second pumping light source 122b, the amplification gains of the first and second rare-earth-doped optical fibers 121a, 121b will not vary even when the first excitation light source 122a is cut off.

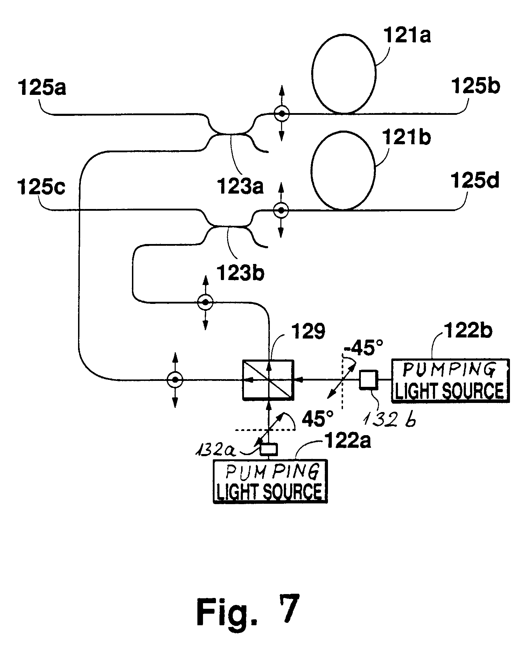

FIG. 7 shows an embodiment of the optical-fiber amplifier of the invention. In FIG. 7, reference numerals 121a, 121b designate first and second optical fibers doped of a rare earth element; 122a, 122b, first and second pumping light sources; 123a, 123b, first and second wavelength division multi/demultiplexing (WDM) devices for combining signal light and pumping light; 129, a polarization beam splitter for combining the first and second pumping light emitted from the first and second pumping light sources 122a, 122b; and 132a, 132b, first and second polarization controllers. The wavelength division multi/demultiplexing (WDM) device may be a WDM optical coupler.

The operation of the optical-fiber amplifier of this embodiment will now be described. The polarization controllers 132a, 132b control the first pumping light outputted from the first pumping light source 122a and the second pumping light outputted from the second pumping light source 122b in such a manner that their respective polarization planes are at +45 degrees and -45 degrees to a predetermined axis, whereupon the thus polarized pumping light is inputted to the polarization beam splitter 129 for separation. Since the pumping light inputted to the polarization beam splitter 129 has a polarization plane inclined by 45°, one half part of the pumping light is allowed to go straight while the other half part of the pumping light is reflected. Therefore each of the two parts of output light is combined of one half of the first pumping light and one half of the second pumping light. These two parts of output light are inputted to the first and second rare-earth-doped optical fibers 121a, 121b, which serve as amplifying media, via the first and second wavelength division multi/demultipexing (WDM) devices 123a, 123b, respectively. Since the combining takes place after the polarization controlling, the level of the combined pumping light is stable.

Since the second pumping light outputted from the second pumping light source 122b is inputted to the first and second rare-earth-doped optical fibers 121a, 121b even in the presence of an abnormality in the first pumping light source 122a, the first and second rare-earth-doped optical fibers 121a, 121b will maintain their amplifying action. At that time, as shown in FIG. 5, if the first and second rare-earth-doped optical fibers 121a, 121b are preset so as to be activated at a saturated area or at another area near the saturated area even by only the second pumping light outputted from the second pumping light source 122b, the amplification gains of the first and second rare-earth-doped optical fibers 121a, 121b will not vary even when the first pumping light source 122a is cut off.

## Claims

1. An optical-fiber amplifier comprising:
(a) first and second sources (122a, 122b) for emitting first pumping light and second pumping light, respectively;
(b) means for combining said first pumping light and said second pumping light to form combined light;
(c) distributing means for distributing said combined light to first and second output terminals;
(d) first and second amplifying media (121a, 121b) coupled to said first and second output terminals for receiving said combined light;
(e) means (132a, 132b) for polarizing said first pumping light and said second pumping light in such a state that they are perpendicular to each other; and
(f) said combined light being formed by said first pumping light and second pumping light, which are emitted from said polarizing means (132a, 132b) ;
characterised in that said polarizing means (132a, 132b) is capable of polarizing a polarization plane of said first pumping light by +45 degrees to a predetermined axis, and of said second pumping light by -45 degrees to said predetermined axis, and in that said combining and distributing means is a polarization beam splitter (129) whose polarizing plane has an orientation such that it is capable of combining part of said first pumping light and part of said second pumping light, which are emitted from said polarizing means (132a, 132b), and also combining the respective other parts of said first and second pumping light, and distributing such combined light to said first and second output terminals.

2. An optical-fiber amplifier according to claim 1, wherein said second source (122b) for emitting said second pumping light has a wavelength different from that of said first pumping light.

3. An optical-fiber amplifier according to claim 1 or 2, wherein said amplifying medium (121a, 121b) is a rare-earth-doped optical fiber.

4. An optical-fiber amplifier according to one of claims 1 to 3, wherein said first and second amplifying media (121a, 121b) are connected to said first and second output terminals by WDM optical couplers (123a, 123b).

## Patentansprüche

1. Faseroptischer Verstärker, welcher aufweist:
(a) eine erste und eine zweite Quelle (122a,122b) zum Emittieren von erstem Pumplicht bzw. zweitem Pumplicht;
(b) eine Vorrichtung zum Kombinieren des ersten Pumplichts und des zweiten Pumplichts zur Bildung von kombiniertem Licht;
(c) eine Verteilungsvorrichtung zum Verteilen des kombinierten Lichts zu ersten und zweiten Ausgangsanschlüssen;
(d) erste und zweite Verstärkungsmedien (121a,121b), die mit den ersten und zweiten Ausgangsanschlüssen zum Empfang des kombinierten Lichts gekoppelt sind;
(e) eine Vorrichtung (132a,132b) zum Polarisieren des ersten Pumplichts und des zweiten Pumplichts in einem solchen Zustand, daß sie senkrecht zueinander sind; und wobei
(f) das kombinierte Licht von dem ersten Pumplicht und dem zweiten Pumplicht gebildet sind, welche von der Vorrichtung (132a,132b) zum Polarisieren emittiert werden;
**dadurch gekennzeichnet**, daß die Polarisationsvorrichtung (132a,132b) in der Lage ist, eine Polarisationsebene des ersten Pumplichts um +45 Grad zu einer vorbestimmten Achse und des zweiten Pumplichts um -45 Grad zu der vorbestimmten Achse zu polarisieren, und daß die Kombinations- und Verteilungsvorrichtung ein Polarisierungs-Strahlteiler (129) ist, dessen Polarisationsebene eine solche Orientierung hat, daß er in der Lage ist, einen Teil des ersten Pumplichts und einen Teil des zweiten Pumplichts, welche von der Polarisationsvorrichtung (132a,132b) emittiert werden, und auch den jeweiligen anderen Teil des ersten und zweiten Pumplichts zu kombinieren und das so kombinierte Licht zu den ersten und zweiten Ausgangsanschlüssen zu verteilen.

2. Faseroptischer Verstärker nach Anspruch 1, worin die zweite Quelle (122b) zum Emittieren des zweiten Pumplichts eine von der des ersten Pumplichts unterschiedliche Wellenlänge hat.

3. Faseroptischer Verstärker nach Anspruch 1 oder 2, worin das Verstärkungsmedium (121a,121b) eine Seltene-Erde-dotierte optische Faser ist.

4. Faseroptischer Verstärker nach einem der Ansprüche 1 bis 3, worin das erste und zweite Verstärkungsmedium (121a,121b) durch optische WDM-Koppler (123a,123b) mit dem ersten und zweiten Ausgangsanschluß verbunden sind.

## Revendications

1. Amplificateur à fibre optique comprenant :
(a) des première et seconde sources (122a, 122b) pour émettre respectivement une première lumière de pompage et une seconde lumière de pompage ;
(b) des moyens pour combiner ladite première lumière de pompage et ladite seconde lumière de pompage pour former une lumière combinée ;
(c) des moyens de distribution pour distribuer ladite lumière combinée à des première et seconde bornes de sortie ;
(d) des premier et second milieux amplificateurs (121a, 121b) couplés auxdites première et seconde bornes de sortie pour recevoir ladite lumière combinée ;
(e) des moyens (132a, 132b) pour polariser ladite première lumière de pompage et ladite seconde lumière de pompage dans un état tel que ces lumières sont perpendiculaires entre elles ; et
(f) ladite lumière combinée étant formée par ladite première lumière de pompage et ladite seconde lumière de pompage, qui sont émises par lesdits moyens de polarisation (132a, 132b) ;
caractérisé en ce que lesdits moyens de polarisation (132a, 132b) sont à même de polariser un plan de polarisation de ladite première lumière de pompage de +45 degrés par rapport à un axe prédéterminé, et de ladite seconde lumière de pompage de -45 degrés par rapport audit axe prédéterminé, et
en ce que lesdits moyens de combinaison et de distribution sont un diviseur de faisceau de polarisation (129) dont le plan de polarisation a une orientation telle qu'il peut combiner une partie de ladite première lumière de pompage et une partie de ladite seconde lumière de pompage, qui sont émises par lesdits moyens de polarisation (132a, 132b), et également combiner les autres parties respectives desdites première et seconde lumières de pompage, et de distribuer ladite lumière combinée auxdites première et seconde bornes de sortie.

2. Amplificateur à fibre optique selon la revendication 1, dans lequel ladite seconde source (122b) pour l'émission de ladite seconde lumière de pompage possède une longueur d'onde qui diffère de ladite première lumière de pompage.

3. Amplificateur à fibre optique selon la revendication 1 ou 2, dans lequel ledit milieu amplificateur (121a, 121b) est une fibre optique dopée par une terre rare.

4. Amplificateur à fibre optique selon l'une des revendications 1 à 3, dans lequel lesdits premier et second milieux amplificateurs (121a, 121b) sont connectés auxdites première et seconde bornes de sortie par des coupleurs optiques WDM (123a, 123b).
